(19) Europäisches Patentamt

European Patent Office

Office européen des brevets

(11) Veröffentlichungsnummer: **0 126 469**
**B1**

(12) **EUROPÄISCHE PATENTSCHRIFT**

(45) Veröffentlichungstag der Patentschrift: **14.03.90**

(21) Anmeldenummer: **84105717.7**

(22) Anmeldetag: **18.05.84**

(51) Int. Cl.⁵: **B 41 B 19/00**

(54) **Optische Lichtfleck-Abtastvorrichtung für ein photoempfindliches Bahnmaterial bei optischen Photosetzgeräten.**

(30) Priorität: **19.05.83 DE 3318311**

(43) Veröffentlichungstag der Anmeldung:
**28.11.84 Patentblatt 84/48**

(45) Bekanntmachung des Hinweises auf die
Patenterteilung:
**14.03.90 Patentblatt 90/11**

(84) Benannte Vertragsstaaten:
**BE CH DE FR GB IT LI LU NL SE**

(56) Entgegenhaltungen:
**DE-A-3 126 642**
**GB-A- 599 748**
**US-A-2 394 649**
**US-A-4 206 482**

(73) Patentinhaber: **Dr. Böger Photosatz GmbH**
**Rissener Strasse 112-114**
**D-2000 Wedel/Hamburg (DE)**

(72) Erfinder: **Holthusen, Bernd**
**Baron-Voght-Strasse 123**
**D-2000 Hamburg 52 (DE)**

(74) Vertreter: **Dipl.-Phys.Dr. Manitz Dipl.-Ing., Dipl.-**
**W.-Ing. Finsterwald Dipl.-Ing. Grämkow Dipl.-**
**Chem.Dr. Heyn Dipl.-Phys. Rotermund**
**Morgan, B.Sc.(Phys.) Robert-Koch-Strasse 1**
**D-8000 München 22 (DE)**

EP 0 126 469 B1

Courier Press, Leamington Spa, England.

## Beschreibung

Die Erfindung betrifft eine optische Lichtfleck-Abtastvorrichtung bei Photosetzgeräten für ein photoempfindliches Blattmaterial nach dem Oberbegriff des Anspruches 1.

Eine Lichtfleck-Abtastvorrichtung dieser Art ist aus der DE-A 31 26 642 bekannt.

Bei anderen bekannten optischen Lichtfleck-Abtastvorrichtungen (z.B. DE-A-30 47 813) sind im allgemeinen aufwendige optische Korrektureinrichtungen erforderlich, um das in einer Ebene angeordnete photoempfindliche Bahnmaterial einwandfrei zu belichten. Das photoempfindliche Bahnmaterial wird bei diesen vorbekannten optischen Lichtfleck-Abtastvorrichtungen deshalb in ebener Anordnung belichtet, weil es von der Materialrolle zunächst in eine Aufnahmekassette überführt und erst dann belichtet wird. Der Laserstrahl tastet das in der Aufnahmekassette befindliche ebene Bahnmaterial Zeile für Zeile quer zu seiner Längsrichtung ab, was sowohl ein- als auch mehrzeilig in beiden Richtungen erfolgen kann. Es können aber auch gleichzeitig zeilenweise der Text in Spalten oder Kompositionen von oben nach unten belichtet und somit gesetzt werden.

Bei der DE—A—31 26 642, welche zur Belichtung von Blattmaterial gedacht ist, wird durch die zylindrische Form des gehaltenen Blattes und die Anordnung des Drehspiegels an der Zylinderachse der Halterung die optische Geometrie weitgehend vereinfacht bzw. die Winkelgeschwindigkeit der Abtastung gleichmäßig gehalten, so daß aufwendige optische Korrektureinrichtungen entfallen.

Trotz dieser Verbesserung müssen bei der eingangs genannten Lichtfleck-Abtastvorrichtung besondere Maßnahmen getroffen werden, um ein latentes Muster mit optimaler Schärfe zu erhalten. Auch lässt die bekannte Anordnung eine Belichtung des Blattmaterials über einen Umfangswinkel von etwa 180° nicht zu.

Die US-A-4 206 482 beschreibt ein elektronisch-optisches Gerät zur Analyse von Dokumenten bei einem Faksimile-Übertragungssystem, in welchem die Dokumente in eine Reihe einzelner Punkte unterteilt werden, die durch ein Photoelement als ein Schwarz-Weiß-Muster erfaßt und dann nach geeigneter Kodierung auf einem Übertragungsweg zu einem geeigneten Empfänger übermittelt werden, wo die Reihe von Punkten rekonstruiert wird, so daß eine Kopie des analysierten Dokumentes hergestellt wird.

Bei diesem bekannten Gerät sind auf einem Schlitten ein Lichtprojektor, ein Drehspiegel und eine Photoempfangsanordnung vorgesehen, wodurch das auf einem Kreiszylinderausschnitt angeordnete Dokument zeilenweise abgetastet werden kann. Das Dokument muß jedoch vor der Abtastung in einem besonderen Arbeitsgang auf dem Kreiszylindersegment angeordnet werden, wodurch nicht nur ein erheblicher Zeitaufwand entsteht, sondern auch die Genauigkeit der Anordnung des Dokumentes auf dem Kreiszylindersegment beeinträchtigt werden kann.

Aufgabe der Erfindung ist es, eine optische Lichtfleck-Abtastvorrichtung bei Photosetzgeräten der eingangs genannten Gattung so weiterzubilden, daß auf einfache und nicht aufwendige Weise eine scharfe, einwandfreie Qualitätsabbildung des Laserlichtflecks auf einem in Bahnform vorliegenden photoempfindlichen Material gewährleistet wird, wobei sowohl die Zu- als auch die Abführung des photoempfindlichen Materials voll automatisch erfolgen kann, ohne daß die Genauigkeit der Anordnung des photoempfindlichen Bahnmaterials relativ zu den optischen Abtastelementen beeinträchtigt wird.

Zur Lösung dieser Aufgabe sind die Merkmale des kennzeichnenden Teils des Patentanspruchs 1 vorgesehen.

Aufgrund dieser Ausbildung kann das photoempfindliche Bahnmaterial vollautomatisch dem Kreiszylindersegment zugeführt und von ihm abgeführt werden, so daß der Aufwand für die Anordnung des photoempfindlichen Materials entlang des Kreiszylindersegments herabgesetzt ist. Aufgrund der automatischen Zu- und Abführung wird dabei gleichzeitig gewährleistet, daß das photoempfindliche Bahnmaterial relativ zum Kreiszylindersegment exakt ausgerichtet ist, so daß es keiner von Hand vorzunehmender Justiermaßnahmen bedarf. Es können somit in schneller zeitlicher Folge und ohne aufwendige Justiermaßnahmen einzelne Abschnitte des photoempfindlichen Bahnmaterials exakt von dem Laserlichtfleck belichtet werden.

Vorteilhafte Weiterbildungen der Erfindung sind durch die Unteransprüche gekennzeichnet.

Die Ausführungsformen nach den Ansprüchen 4 bis 7 haben den Vorteil, daß auch Blattmaterial unterschiedlicher Breite in der Vorrichtung verarbeitet werden kann. Bei Auslegung der erfindungsgemäßen Vorrichtung auf das breitest mögliche Format ist die Möglichkeit gegeben, zwei verschiedene photoempfindliche Bahnmaterialien in gleicher oder unterschiedlicher Materialbreite durch die Vorrichtung hindurchzuführen. Dies ist z.B. dann wichtig, wenn die Korrektur auf Papier und die Endbelichtung auf Film zur Übertragung auf eine Offset-Platte erfolgt. Die Walzenpaare haben dann z.B. einen gemeinsamen Kern von 500 mm Breite, wobei ein Abschnitt 250 mm breit ist und durch einen Motor angetrieben wird. In der Mittelzone befindet sich dann ein lose mitlaufendes Stück von 70 mm Breite. Am Ende wiederum liegt ein angetriebenes Stück von 130 mm Breite vor. Auf diese Weise kann durch den synchronen Antrieb aller Motoren ein Bahnmaterial der maximalen Breite von 500 mm transportiert werden. Es können aber auch nebeneinander zwei Materialbahnen von je 205 mm Breite (Standard) belichtet werden. Weiter ist es möglich, ein Bahnmaterial von 300 mm Breite neben einem Schmalformat von 70 mm Breite zu belichten. Die mit der erfindungsgemäßen Vorrichtung erzielbare Arbeitsgeschwindigkeit kann aufgrund der vorstehend erläuterten bevorzugten Ausführungsformen ohne Beeinträchtigung der Genauigkeit weiter gesteigert werden.

Von besonderer Bedeutung ist es, daß aufgrund des erfindungsgemäßen Arbeitens mit Geber- und Nehmerkassetten die Vorrichtung so ausgebildet werden kann, daß das photoempfindliche Bahnmaterial sowohl in den Kassetten als auch während der Belichtung am Kreiszylindersegment völlig lichtdicht nach außen abgeschlossen ist, so daß ein Arbeiten unter Dunkelkammerbedingungen vermieden werden kann. Besonders vorteilhaft hierfür ist die Ausführungsform nach Anspruch 9.

Eine besonders bevorzugte Anordnung des Drehspiegels ergibt sich aus den Ansprüchen 10 und 11. Bei dieser Ausbildung können die umlaufenden Massen besonders klein gehalten werden. Insbesondere ist es auf diese Weise möglich, den Laserstrahl axial auf den umlaufenden Drehspiegel auftreffen zu lassen, wodurch die Justierung erleichtert ist.

Die Erfindung wird im folgenden beispielsweise anhand der Zeichnung beschrieben; in dieser zeigt:

Fig. 1 eine schematische, zum Teil aufgebrochene perspektivische Ansicht einer optischen Lichtfleck-Abtastvorrichtung für ein photoempfindliches Bahnmaterial bei optischen Photosetzgeräten und

Fig. 2 einen Axialschnitt der optischen Lichtfleck-Abtastvorrichtung nach Fig. 1, in dem jedoch mehr Einzelheiten gezeigt sind.

Fig. 3 eine Stirnansicht einer weiteren bevorzugten Ausführungsform, die die Belichtung des photoempfindlichen Blattmaterials über einen Umfangswinkel von 180° ermöglicht,

Fig. 4 eine perspektivische Ansicht des Schlittens der Ausführungsform gemäß Fig. 3.

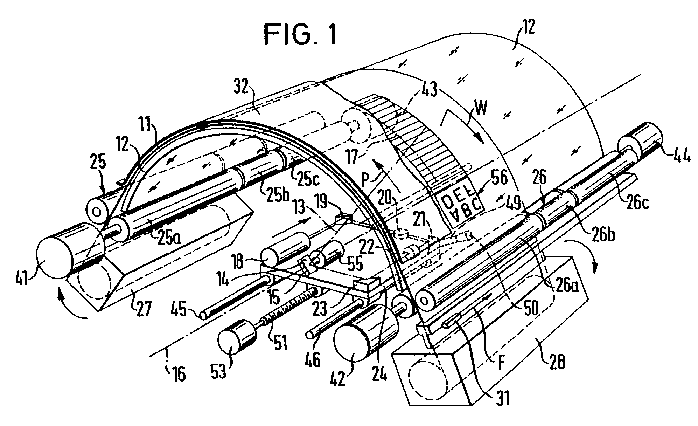

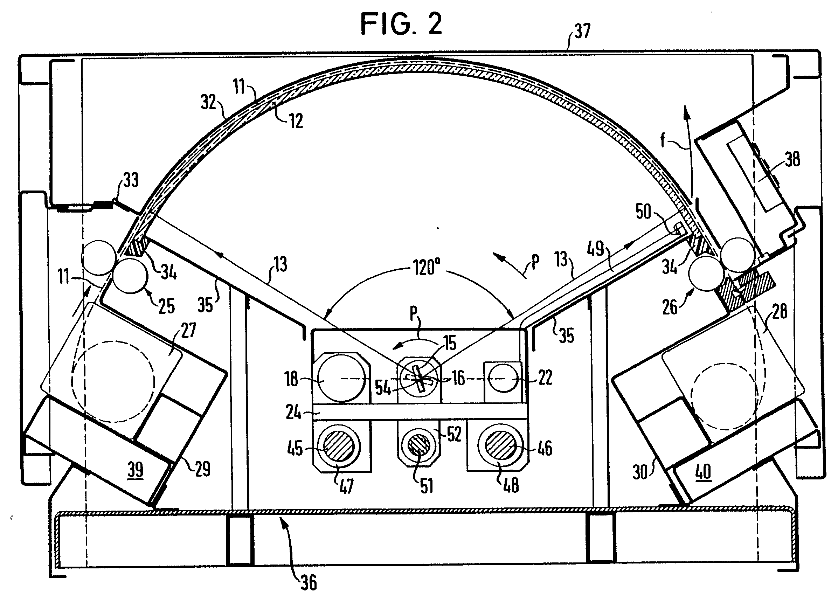

Nach Fig. 1 und 2 erstreckt sich ein aus Glas bestehendes Kreiszylindersegment 12 um seine Zylindersegmentachse 16 oberhalb derselben über einen Winkel von 120°. An den Umfangsenden ist das Kreiszylindersegment 12 in Kunststoffleisten 34 (Fig. 2) gelagert, welche ihrerseits über sich im wesentlichen radial erstreckende Blechstützen 35 am Gestell 36 der Vorrichtung befestigt sind.

Mit geringfügigem Abstand ist das Kreiszylindersegment von einer ebenfalls kreiszylindersegmentförmigen Führungsabdeckung 32 umgeben, welche nach Fig. 2 im Bereich des linken Umfangsendes des Kreiszylindersegmentes 12 um eine parallel zur Zylindersegmentachse 16 verlaufende Schwenkachse 33 schwenkbar gelagert ist, so daß die Führungsabdeckung 32 in Richtung des Pfeiles f in Fig. 2 nach oben aufgeklappt werden kann, sofern zuvor der Deckel 37 der Vorrichtung abgenommen bzw. aufgeklappt wurde.

An der Vorderseite der Vorrichtung befindet sich nach Fig. 2 ein Bedienungspult 38.

Im hinteren Bereich der Vorrichtung ist unmittelbar vor dem Kreiszylindersegment 12 ein Einführungswalzenpaar 25 vorgesehen, dessen Achsen sich parallel zur Zylindersegmentachse 16 erstrecken. In entsprechender Weise ist am entgegengesetzten Umfangsende des Kreiszylindersegments 12 im vorderen Bereich der Vorrichtung ein Abführungswalzenpaar 26 untergebracht.

Vor bzw. hinter dem Einführungswalzenpaar 25 bzw. dem Abführungswalzenpaar 26 sind Kassettenaufnahmeräume 29, 30 vorgesehen, in denen Geberkassetten 27 bzw. Nehmerkassetten 28 unterschiedlicher Größe untergebracht werden können.

Nach Fig. 2 sind in den Kassettenaufnahmeräumen 29, 30, die für Kassetten mit einem Querschnitt von 140 mm² ausgelegt sind, vermittels eines Adapterstückes 39 bzw. 40 kleinere Kassetten 27, 28 mit einem Querschnitt von 100 mm² angeordnet.

Trotz der relativ großen Kassettenaufnahmeräume 29 bzw. 30 hat die Gesamtvorrichtung nur eine Tiefe von etwa 75 cm bei einer Höhe von knapp 50 cm. Die Breite (Fig. 1) liegt bei etwa 70 cm. Hierbei ist eine großformatige Belichtungsfläche von 500 x 600 mm zugrundegelegt. Das Kreiszylindersegment 12 besitzt einen Umfang von 600 mm und eine axiale Erstreckung von 500 mm.

Von der Geberkassette 27 wird photoempfindliches Bahnmaterial 11 abgerollt und um das Kreiszylindersegment 12 herumgelegt. Hierbei wird das Bahnmaterial 11 durch das Einführungswalzenpaar 25 und das Abführungswalzenpaar 26 hindurchgeführt. Es gelangt dann schließlich in die Nehmerkassette 28, wo es erneut aufgerollt wird.

Nach den Fig. 1 und 2 befindet sich zwischen den Abführungswalzenpaaren 26 und der Nehmerkassette 28 eine Schneidvorrichtung 31, die aus einem Messer besteht, welches in Querrichtung der Bahn in Richtung des Pfeiles F (Fig. 1) bewegbar ist, um das bereits in der Nehmerkassette 28 befindliche photoempfindliche Bahnmaterial von dem noch auf dem Zylindersegment 12 aufliegenden Bahnmaterial zu trennen.

Nach Fig. 1 weisen das Einführungswalzenpaar 25 und das Abführungswalzenpaar 26 jeweils drei Abschnitte 25a, 25b, 25c bzw. 26a, 26b, 26c auf. Die in Fig. 1 linken Walzenpaare 25a, 26a sind jeweils durch Motore 41, 42 angetrieben. Der Antrieb wirkt jeweils nur auf eine, und zwar die innere Walze des Walzenpaares.

Die Walzenpaare 25a, 26a haben zweckmäßig eine Länge von 250 mm. Anschließend folgt dann ein kurzer Walzenpaarabschnitt 25b, 26b mit einer Länge von etwa 70 mm. Dieser Walzenpaarabschnitt ist nicht angetrieben, sondern läuft frei mit. Am Ende befinden sich dann wieder Walzenpaarabschnitte 25c, 26c, die durch Motore 43 bzw. 44 angetrieben sind. Auch in diesem Fall wird lediglich der innere Walzenabschnitt von einem der Motore 43, 44 angetrieben.

In der Zeichnung ist gezeigt, wie ein photoempfindliches Bahnmaterial von 205 mm Breite durch die ersten Walzenpaarabschnitte 25a bzw. 26a um die linke Hälfte des Kreiszylindersegments 12 herumgeführt sind. Die Führungsabdeckung 32 ist teilweise weggebrochen, um das Bahnmaterial 11 zu veranschaulichen.

Im Innern des Zylindersegments 12 befindet sich ein Schlitten 24, der auf zwei Führungsstangen 45, 46, die parallel zur Zylindersegmentachse 16 verlaufen, axial geführt ist, und zwar mittels Kugelbuchsen 47, 48 (Fig. 2). An dem Schlitten ist über einen Arm 49 ein phototransistor 50 befestigt, welcher mit nicht dargestellten Marken am vorderen Umfangsrand des Kreiszylindersegments 12 zusammenarbeitet, um die Bewegung des Schlittens 24 in Axialrichtung mit der noch zu beschreibenden Abtastbewegung des Laserstrahls 13 zu synchronisieren.

Der Schlitten wird in Axialrichtung 16 durch eine Spindel 51 angetrieben, die in einer am Schlitten 24 befestigten Mutter 52 (Fig. 2) drehbar angeordnet ist. Ein Motor 53 (Fig. 1) treibt die Spindel 51 in gesteuerter Weise zu einer Drehbewegung an.

Auf dem Schlitten 24 ist nach den Fig. 1 und 2 parallel zur Zylindersegmentachse 16 ein Laser 18 angeordnet, der einen Lichtstrahl parallel zur. Zylindersegmentachse 16 zu einem 90°-Umlenkspiegel 19 lenkt, der den Laserstrahl nach innen zu einem Lasermodulator 20 lenkt. Der im Sinne des zu erzeugenden Schriftbildes modulierte Laserstrahl gelangt dann auf einen weiteren 90°-Umlenkspiegel 21, welcher dem Strahl eine erneute 90°-Umlenkung erteilt, so daß er wieder parallel aber entgegengesetzt zu dem aus dem Laser 18 austretenden Strahl verläuft. Der Strahl gelangt dann durch ein Korrekturobjektiv 22 auf einen dritten 90°-Umlenkspiegel 23, welcher den Laserstrahl wieder in Richtung des Lasers 18 umlenkt. Zwischen dem Laser 18 und dem Umlenkspiegel 23 befindet sich ein Drehspiegel 15, dessen Drehachse 54 mit der Zylindersegmentachse 16 zusammenfällt und in der die Spiegelfläche 14 liegt. Ein Motor 55 treibt den Drehspiegel 15 zu einer kontinuierlichen Drehbewegung an. Auf diese Weise wird ein radial verlaufender Laserstrahl 13 auf die nach innen gerichtete photoempfindliche Schicht des photoempfindlichen Bahnmaterials 11 gerichtet.

In Fig. 2 sind die beiden durch einen Winkel von 60° getrennten Stellungen des Drehspiegels 15 eingezeichnet, welche den beiden extremen Winkelpositionen des radialen Laserstrahls 13 entsprechen. Durch kontinuierliche Drehung des Drehspiegels 15 wird also das photoempfindliche Bahnmaterial 11 zwischen den beiden in Fig. 2 dargestellten Extremlagen kontinuierlich vom Laserstrahl 13 abgetastet. Indem der Schlitten 24 nach jeder Winkelabtastung mittels des Drehspiegels 15 um ein kleines Stück vorgeschoben wird, kann so die gesamte Breite des Bahnmaterials 11 spaltenweise vom Laserstrahl 13 abgetastet werden. Durch geeignete Modulation wird dann auf dem photoempfindlichen Bahnmaterial ein latentes Bild erzeugt, wie es bei 56 in Fig. 1 schematisch angedeutet ist.

Wesentlich ist, daß die Mittellängsachse 17 des Bahnmaterials kreisförmig um das Kreiszylindersegment 12 herumgelegt ist, so daß das photomaterial in seiner natürlichen Biegungsrichtung angeordnet und in dieser Position fehlerfrei belichtet wird.

Aus Fig. 2 ergibt sich, daß einem Schwenkwinkel des Drehspiegels 15 um 60° eine Ablenkung des Laserstrahls 13 um 120° entspricht. Sowohl der Laserstrahl 13 als auch der Drehspiegel bewegen sich nach Fig. 1 und 2 entgegen dem Uhrzeigersinn in Richtung der Pfeile P. Das Bahnmaterial wird dagegen nach Fig. 1 in Richtung des pfeiles W bewegt.

Vor der Belichtung wird das Bahnmaterial von der Geberkassette 27 abgezogen und um das Kreiszylindersegment 12 herumgelegt. Anschließend befindet sich dann das photoempfindliche Bahnmaterial 11 zur Durchführung der Belichtung in Ruhe.

Mit der die Ablenkung des Laserstrahls 13 und den Vorschub des Schlittens 24 steuernden Elektronik ist es aufgrund einer geeigneten Speicherorganisation möglich, die zu belichtenden Text- und Bildteile so vorzusortieren, daß unter Verwendung einer geeigneten Programmierung die Bilder nicht nur in der aus der Zeichnung ersichtlichen Form in der Vorschubrichtung des photoempfindlichen Bahnmaterials belichtet werden, sondern auch in einer Richtung 90° zur Abtastrichtung des Laserstrahls, d.h. in Axialrichtung.

Der Schlitten 24 beginnt bei eingelaufenem und um das Kreiszylindersegment 12 herumgelegtem photoempfindlichen Bahnmaterial mit dem kontinuierlichen Belichten vorne rechts in der Ecke bei der Darstellung der Fig. 1. Der Abtastlaserstrahl 13 wird durch den mit dem Schlitten 24 verbundenen Phototransistor 50 synchronisiert. Der Schlitten bewegt sich kontunierlich oder schrittweise während des Belichtungsvorgangs nach den Fig. 1 und 2 von vorn nach hinten. Der Antrieb des Schlittens 24 kann auch durch ein Stahlband erfolgen.

Die Verwendung eines Monospiegels 15 hat gegenüber Polygonprismen bzw. Spiegelrädern den Vorteil, daß der Strahl ohne Auswandern der Trommelachse exakt projiziert werden kann. Da das erfindungsgemäße System technisch so konzipiert ist, daß die Formatbreite keine Rolle spielt, ist die Vorrichtung bevorzugt auf das größte zu verarbeitende Nutzformat von 500 x 600 mm ausgelegt. Um die besonders breite Materialführung sinnvoll zu nutzen, ist erstmalig bei dem erfindungsgemäßen System die Möglichkeit gegeben, zwei verschiedene Materialien in gleicher oder unterschiedlicher Materialbreite im System zu führen. Dies ist sehr wichtig, wenn die Korrektur auf Papier und die Endbelichtung auf Film zur Übertragung auf eine Offset-Platte erfolgt.

Die Walzen der Walzenpaare 25 bzw. 26 haben einen gemeinsamen Kern von 500 mm Breite, auf dem die erwähnten Walzenpaarabschnitte 25a, 25b, 25c bzw. 26a, 26b, 26c angeordnet sind.

Die Achsen der Bahnmaterialrollen in den Kassetten 27, 28, der Walzenpaare 25, 26 und die Zylindersegmentachse verlaufen also alle parallel zueinander ebenso wie die Bewegungsrichtung des Schlittens 24.

Ein wesentlicher Vorteil der erfindungsgemäßen Anordnung besteht darin, daß auf stehendem Photomaterial belichtet werden kann.

Durch die große Ablenkung von 60° bei dieser optischen Einrichtung wird 1/6 der Gesamtumdrehung des Drehspiegels 15 für die Lichtfleckprojektion genutzt, und es kann vorteilhafterweise auf die Anordnung eines Polygon-Spiegels verzichtet werden.

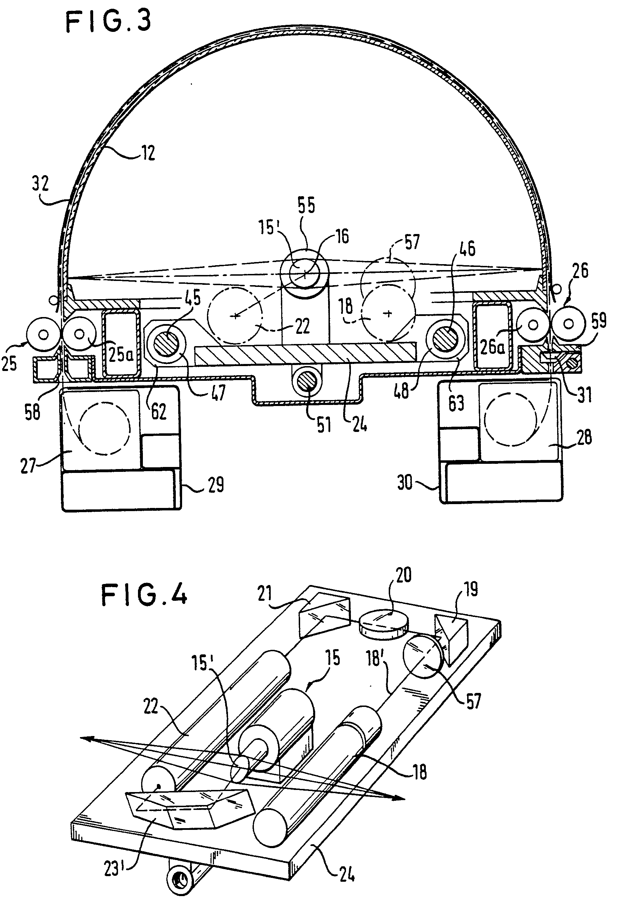

Eine noch größere Ablenkung ist bei der Ausführungsform gemäß Fig. 3 und 4 möglich. Bei dieser Ausführung bedeuten die gleichen Bezugszeichen auch die gleichen Teile bei der Ausführung gemäß Fig. 1 und 2.

Die räumliche Anordnung der Ausführung gemäß Fig. 3 und 4 ist jedoch etwas anders getroffen, um die erwünschte Abtastung bzw. Belichtung über einen Umfangswinkel von 180° zu erreichen. Zunächst erstreckt sich die kreissegmentartige Halterung 12 über etwas mehr als 180°, damit die zu belichtende Bahn über den erwünschten Winkel von 180° abgetastet werden kann. Die kreissegmentartige Halterung hat somit die Form eines Halbzylinders, was den großen Vorteil bietet, daß die Ebene der Geberkassette 27 mit der Ebene der Nehmerkassette parallel läuft und ein einfacher symmetrischer Aufbau der Transportmechanik gegeben ist, die eingangsseitig aus der Kassette 27 der Führung 58 und dem Einführungswalzenpaar 25 und ausgangsseitig aus dem Abführungswalzenpaar 26, der sich durch die Schneidvorrichtung 31 erstreckenden Führung 59 und der Nehmerkassette 28 besteht. Der achssymmetrische Aufbau ermöglicht den beliebigen Wechsel von Geber-und Nehmerkassette, was bei Anordnung eines späteren Online-Entwicklungssystems mechanisch vereinfachend wirkt. Die halbzylindrische Anordnung zeichnet sich darüberhinaus dadurch aus, daß sie eine sehr kompakte Bauform in der Höhe und Tiefe darstellt.

Um die Abtastung durch 180° zu ermöglichen, wird eine besondere Anordnung auf dem Schlitten getroffen. Diese Anordnung läßt sich der Fig. 4 entnehmen. Wie ersichtlich, läuft der vom Laser 18 erzeugte Laserstrahl 18' zunächst durch einen Graufilter 57 und er wird dann durch ein Umlenkelement 19 um 90° umgelenkt. Der Strahl läuft dann durch einen Modulator 20 und trifft wieder auf ein Umlenkelement 21 auf. Nach erneuter Umlenkung um 90° am Umlenkelement 21 läuft der Laserstrahl durch ein Korrekturobjektiv bzw. einem Kollimator 22 und fällt dann auf ein Prisma 23' auf. Dieses Prisma ist in seiner Ebene gegenüber dem Schlitten gekippt angeordnet, so daß der Laserstrahl nach zwei Reflexionen an den zueinander geneigten Seitenflächen des Prismas auf die Drehspiegelanordnung 15 in einer Richtung auftrifft, die mit der Achse 16 der kreissegmentartigen Halterung 12 zusammenfällt. Die Drehspiegelanordnung weist einen Drehspiegel 15' mit einer zur Achse 16 der kreissegmentartigen Halterung 12 einen Winkel von 45° einschließenden ebenen Spiegelfläche auf.

Durch die gekippte Anordnung des Prismas 23' wird sichergestellt, daß die Höhe des Laserstrahls 18' oberhalb des Schlittens 24 vergrößert wird, so daß er in Richtung der im Vergleich zu der Ausführungsform gemäß Fig. 1 und 2 höher angeordneten Drehachse 16 des Drehspiegels 15' auf diesen fällt, wobei die Drehachse 16 oberhalb der auf dem Schlitten seitlich benachbarten Teile, d.h. des Lasers 18 und des Kollimators 22 liegt. Somit bewirkt eine Drehung des Drehspiegels 15' durch 180° um seine Drehachse eine Abtastung bzw. Belichtung der Bahn um eine Umfangswinkel von 180°.

Aus der Zeichnung gemäß Fig. 3 entnimmt man, daß die zwei Führungsstangen 45, 46 für den Schlitten 24 etwa in der Höhe der Längsseiten der Schlitten angebracht sind. Eine leichte Gleitbewegung des Schlittens entlang der Führungsstangen, wird auch hier durch Kugelbuchsen gesichert. Die Kugelbuchsen 47, 48 sind in Halterungen 62, 63 gehalten, die mit dem Schlitten fest verschraubt sind. Der Raum unterhalb des Schlittens 24 und zwischen den Kassettenaufnahmeräumen 29, 30 kann für die Unterbringung der zugeordneten Elektronik usw. benutzt werden. Somit wird das Platzangebot optimal ausgenutzt.

Schließlich sollte bemerkt werden, daß die erfindungsgemäße Vorrichtung sowohl mit einzelnen Blättern des photoempfindlichen Blattmaterials als auch mit Bahnen desselben, z.B. Rollfilm arbeiten kann.

**Patentansprüche**

1. Optische Lichtfleck-Abtastvorrichtung bei Photosetzgeräten fü ein photoempfindliches Blattmaterial mit einem modulierten Laser zur Erzeugung eines modulierten Laserstrahles (13), mit einer kreiszylindersegmentartigen Halterung (12) fur das Blattmaterial zur Halterung des Blattmaterials in einer teilzylindrischen Form, mit einem parallel zur Achse der kreissegmentartigen Halterung (12) verschiebbaren Schlitten (24), welche eine Abbildungsoptik und eine Drehspiegelanordnung (15) trägt, deren Drehachse (54) mit der Achse (16) der kreiszylindersegmentartigen Halterung (14) zusammenfällt, wobei der über die Abbildungsoptik auf die Drehspiegelanordnung (15) fallende und nach erfolgter Reflexion an der Drehspiegelanordnung (15) zum Blattmaterial radial gerichtete Laserstrahl (13) durch die Drehung der Drehspiegelanordnung (15) und Verschiebung des Schlittens (24) das Blattmaterial zeilenweise abtastet und durch geeignete Modulation des Laserstrahles (13) ein gewünschtes latentes Muster auf dem Material erzeugt, dadurch gekennzeichnet, daß das Blattmaterial in Form einer Bahn (11) vorliegt, die aus einer an dem einen Ende der als Kreiszylindersegment (12) ausgebildeten Halterung angeordneten Geberkassette (27) kommt, an dem Kreiszylindersegment entlanggeführt und von einer an dem anderen Ende der Halterung angeordneten Nehmerkassette aufgenommen wird und daß an den Enden des Kreiszylindersegments (12) parallel zur Zylindersegmentachse (16) verlaufende Bahnmaterial-Einführungs- (25) bzw. Abführungswalzenpaare (26) vorgesehen sind, wobei zumindest die Abführungswalzenpaare (26) motorisch angetrieben sind.

2. Vorrichtung nach Anspruch 1, dadurch gekennzeichnet, daß das Kreiszylindersegment (12) durchsichtig und das Bahnmaterial (11) außen um das Kreiszylinderelement (12) heumgelegtist.

3. Vorrichtung nach Anspruch 2, dadurch gekennzeichnet, daß das Kreiszylindersegment sich über einen Winkel zwischen 100 und 180° erstreckt.

4. Vorrichtung nach einem der vorhergehenden Ansprüche, dadurch gekennzeichnet, daß die Ein-führungswalzenpaare (25) und die Abführungs-walzenpaare (26) in ihrer Längsrichtung in meh-rere unterschiedlich antreibbare bzw. leerlau-fende Abschnitte (25a, b, c; 26a, b, c) unterteilt sind.

5. Vorrichtung nach Anspruch 4, dadurch gekennzeichnet, daß die Einführungswalzenpaare (25) und die Abführungswalzenpaare (26) in drei unmittelbar aneinander angrenzende Abschnitte (25a, b, c; 26a, b, c) geteilt sind, von denen die beiden Endabschnitte (25a, c; 26a, c) separat antreibbar sind, während der mittlere Abschnitt (25b; 26b) frei mitläuft und vorzugsweise, daß der erste Abschnitt (25a; 26a) ebenso breit ist wie der zweite und dritte Abschnitt (25b, c; 26b, c) zusammen.

6. Vorrichtung nach Anspruch 4 oder 5, dadurch gekennzeichnet, daß vor bzw. nach dem Einfüh-rungswalzenpaar (25) bzw. dem Abführungswal-zenpaar (26) wenigstens eine Geber- (27) bzw. Nehmerkassette (28) angeordnet ist, und daß die Breiten der Kassetten (27, 28) gleich der Breite eines Abschnittes oder mehrerer nebeneinander liegender Abschnitte ist.

7. Vorrichtung nach Anspruch 6, dadurch gekennzeichnet, daß zur Aufnahme von Geber-kassetten bzw. Nehmerkassetten (28) unter-schiedlicher Größe jeweils ein auf kleinere Kas-settengrößen reduzierbarer Kassettenaufnahme-raum (29, 30) vorgesehen ist, welcher für die Aufnahme der größtmöglichsten Kassettengröße ausgelegt ist.

8. Vorrichtung nach einem der Ansprüche 4 bis 7, dadurch gekennzeichnet, daß zwischen den Abführungswalzenpaaren (26a, b c) und der Nehmerkassette (28) bzw. den Nehmerkassetten eine Schneidvorrichtung (31) eingeschaltet ist.

9. Vorrichtung nach einem der vorhergehenden Ansprüche, dadurch gekennzeichnet, daß außen um das Kreiszylindersegment (12) mit Abstand von diesem eine lichtundurchlässige Führungsabdeckung (33) herumgelegt und vorzugsweise um eine parallel zur Halterungsachse (16) verlaufende Schwenkachse (33) nach oben wegschwenkbar angebracht ist.

10. Vorrichtung nach einem der vorhergehenden Ansprüche, dadurch gekennzeichnet, daß die Drehspiegelanordnung (15) einen Drehspiegel (15') mit einer zur Achse (16) der kreissegmentartigen Halterung (12) einen Winkel von 45° einschließenden ebenen Spiegelfläche aufweist.

11. Vorrichtung nach Anspruch 10, dadurch gekennzeichnet, daß die Drehachse der Drehspiegelanordnung (15) oberhalb der auf dem Schlitten (24) seitlich benachbarten Teile (18, 22) liegt.

**Revendications**

1. Dispositif optique de balayage par spot lumineux dans des appareils de photocomposition pour un matériau photosensible en feuille, comportant un laser modulé pour produire un rayon laser (13) modulé, un support (12) en forme de segment cylindrique circulaire pour le matériau en feuille pour le maintenir en une forme semi-cylindrique, un chariot (24) pouvant coulisser parallèlement à l'axe du support (12) en forme de segment circulaire, lequel axe porte un dispositif optique de reproduction d'image et un dispositif de miroir tournant (15) dont l'axe de rotation (54) coïncide avec l'axe (16) du support (12) en forme de segment cylindrique circulaire, dans lequel le rayon laser (13), qui vient frapper le dispositif de miroir tournant (15) au moyen du dispositif optique de reproduction d'image et, après réflexion sur le dispositif de miroir tournant (15), est dirigé vers le matériau en feuille, balaie le matériau en feuille ligne par ligne au moyen de la rotation du dispositif de miroir tournant (15) et du déplacement du chariot (24) et, par une modulation adéquate du rayon laser (13) produit un modèle latent souhaité sur le matériau, caractérisé en ce que le matériau en feuille se présente sous la forme d'une bande (11) qui part d'une cassette émettrice (27) disposée à une des extrémités du support (12) conformé en segment cylindrique circulaire, est guidée le long du segment cylindrique circulaire et est réceptionnée par une cassette réceptrice (28) disposée à l'autre extrémité du support, et en ce qu'aux extrémités du segment (12) cylindrique circulaire sont prévus des couples de cylindres d'introduction (25) et des couples de cylindres de sortie (26) du matériau en bande, orientés parallèlement à l'axe (16) du segment cylindrique et, dans ce cas, au moins les couples de cylindres de sortie (26) sont actionnés par un moteur.

2. Dispositif selon la revendication 1, caractérisé en ce que le segment cylindrique circulaire (12) est transparent et en ce que le matériau en bande (11) est enroulé sur la face externe du segment cylindrique circulaire (12).

3. Dispositif selon la revendication 2, caractérisé en ce que le segment cylindrique circulaire (12) s'étend sur un angle compris entre 100° et 180°.

4. Dispositif selon l'une quelconque des revendications précédentes, caractérisé en ce que les couples de cylindres d'introduction (25) et les couples de cylindres de sortie (26) sont subdivisés en plusieurs sections (25a, b, c; 26a, b, c) pouvant être actionnées ou tourner à vide de manière différente.

5. Dispositif selon la revendication 4, caractérisé en ce que les couples de cylindres d'introduction (25) et les couples de cylindres de sortie (26) sont divisés respectivement en trois sections disposées directement les unes à côté des autres (25a, b, c; 26a, b, c), dont les deux sections d'extrémité (25a, 25c; 26a, 26c) peuvent être actionnées séparément tandis que la section centrale (25b; 26b) tourne simultanément en course libre et, de façon préférentielle, en ce que la première section (25a; 26a) est aussi longue que les deuxième et troisième sections (25b, c; 26b, c) réunies.

6. Dispositif selon l'une des revendications 4 et 5, caractérisé en ce qu'au moins une cassette émettrice (27) est disposée à l'avant du couple de cylindres d'introduction (25) et au moins une cassette réceptrice (28) est disposée à l'arrière du couple de cylindres de sortie (26) et en ce que la largeur des cassettes (27, 28) est égale à la largeur d'une section ou de plusieurs sections disposées les unes à côté des autres.

7. Dispositif selon la revendication 6, caractérisé en ce qu'il est prévu, pour loger respectivement des cassettes émettrices (27) et des cassettes réceptrices (28) de différentes grandeurs, un espace de réception (29, 30) de cassettes qui peut être réduit de façon à s'adpater à des cassettes plus petites, lequel espace (28, 30) est dimensionné de manière à recevoir des cassettes aussi grandes que possible.

8. Dispositif selon l'une quelconque des revendications 4 à 7, caractérisé en qu'un dispositif de coupe (31) est inséré entre les couples de cylindres de sortie (26a, b, c) et la cassette réceptrice (28) ou les cassettes réceptrices.

9. Dispositif selon l'une quelconque des revendications précédentes, caractérisé en ce qu'un couvercle opaque de guidags (32) est disposée sur la face externe du segment cylindrique circulaire (12), avec un intervalle par rapport à celui-ci et, de façon préférentielle, il est logé de façon à pouvoir être retiré en pivotant, vers le haut, autour d'un axe de pivotement parallèle à l'axe (16) du support (12).

10. Dispositif selon l'une quelconque des revendications précédentes, caractérisé en ce que le dispositif de miroir tournant (15) comporte un miroir tournant (15') présentant une surface de miroir plane enfermant un angle de 45° par rapport à l'axe (16) du support (12) en forme de segment circulaire.

11. Dispositif selon la revendication 10, caractérisé en ce que l'axe de rotation du dispositif de miroir tournant (15) est situé au-dessus des éléments (18, 22) qui sont à proximité de chaque côté et disposés sur le chariot (24).

**Claims**

1. Optical light bead scanning device for a photosensitive sheet material in photocomposition apparatus, comprising a modulated laser for generating a modulated laser beam (13); a holder (12) for the sheet material, the holder having the shape of a segment of a right cylinder for holding the sheet material in a partially cylindrical shape; a carriage (24) which can be displaced parallel to the axis of the holder, wherein the carriage carries an optical image forming system and a rotatable mirror arrangement (15), with the axis of rotation (54) of the rotatable mirror coinciding with the axis (16) of the right cylindrical segment-like holder (12), and wherein the laser beam (13) which falls on the rotatable mirror arrangement (15) via the optical image-forming system, and which is substantially radially directed towards the photosensitive material in the holder after reflection at the rotatable mirror arrangement (15), scans the sheet material linewise through the rotation of the rotatable mirror arrangement (15) and displacement of the carriage (24) and generates a desired latent pattern in the photosensitive material through modulation of the laser beam (13), characterised in that the sheet material is present in the form of a web (11) which comes from a supply cassette (27) arranged at one end of the holder, which is constructed as a segment (12) of a right cylinder, is guided along the segment of the cylinder and is received by a take-up cassette at the other end of the holder; and in that, at the ends of the cylinder segment (12) there are provided supply roller pairs and take-off roller pairs (25) respectively which extend parallel to the axis (16) of the cylinder segment, with at least the take-off rollers (26) being driven by a motor.

2. Device in accordance with claim 3, characterised in that the cylinder segment (12) is transparent; in that the web material (11) is laid externally around the cylinder segment (12).

3. Device in accordance with claim 2, characterised in that the cylinder segment extends over an angle between 100 and 180°.

4. Device in accordance with claim 5, characterised in that the supply roller pairs (25) and the take-off roller pairs (26) are subdivided in their longitudinal direction into several differentially drivable and/or idler sections (25a, b, c; 26a, b, c).

5. Device in accordance with claim 4, characterised in that the supply roller pairs (25) and take-off roller pairs (26) are subdivided into three directly adjacent sections (25a, b, c; 26a, b, c) of which the two end sections (25a, c; 26a, c) are separately drivable whereas the central section (25b; 26c) is free running; and, preferably, in that the first section (25a; 26a) is just as broad as the second and third sections (25b, c; 26b, c) together.

6. Device in accordance with one of the claims 4 or 5, characterised in that before and/or after the supply roller pair (25) and the take-off roller pair (26) respectively there is provided at least one supply cassette (27) and take-up cassette (28) respectively; and in that the widths of the cassettes (27, 28) is the same as the width of one section or several adjacent sections.

7. Device in accordance with claim 6, characterised in that for accommodating supply cassettes (27) or take-up cassettes (28) of different sizes there is in each case provided a cassette chamber (29, 30) which is laid out to receive the largest possible size of cassette and which can be reduced to the smallest cassette size.

8. Device in accordance with one of the claims 4 to 7, characterised in that a cutting device (31) for the photosensitive material is inserted between the take-off roller pairs (26a, b, c) and the take-up cassette (28) or the take-up cassettes.

9. Device in accordance with claim 3, characterised in that a light impermeable guide cover (33) is disposed externally around the cylinder segment (12) and is spaced therefrom, and is preferably mounted about a pivot axis (33) extending parallel to the cylinder axis (16) for pivotal movement upward and away.

10. Device in accordance with one of the preceding claims, characterised in that the rotatable mirror arrangement (15) has a rotatable mirror (15') with a planar mirror surface which includes an angle of 45° to the axis (16) of the right cylindrical segment-like holder (12).

11. Device in accordance with claim 10, characterised in that the axis of rotation of the rotatable mirror arrangement (15) lies above the laterally disposed adjacent parts (18, 22) on the carriage (24).

# FIG. 1

FIG. 2

EP 0 126 469 B1

FIG.3

FIG.4